(19) Europäisches Patentamt
European Patent Office
Office européen des brevets

(11) **EP 2 557 186 A1**

(12) **EUROPEAN PATENT APPLICATION**

(43) Date of publication:
**13.02.2013 Bulletin 2013/07**

(21) Application number: **12190009.6**

(22) Date of filing: **04.08.2008**

(51) Int Cl.:
***C22B 5/10*** *(2006.01)*          ***C01B 33/025*** *(2006.01)*
***C22B 1/245*** *(2006.01)*

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.08.2007 US 954328 P**

(62) Document number(s) of the earlier application(s) in accordance with Art. 76 EPC:
**08827006.1 / 2 176 435**

(71) Applicant: **Dow Corning Corporation**
**Midland, MI 48686-0994 (US)**

(72) Inventors:
• **Herbert, Robert**
  **Midland, MI Michigan 48640 (US)**

• **Yilmaz, Sefa**
  **Saginaw, MI Michigan 48603 (US)**
• **Black, Victor**
  **Beaverton, MI Michigan 48612 (US)**
• **Burns, Gary**
  **Midland, MI Michigan 48640 (US)**

(74) Representative: **Fyfe, Fiona Allison Watson**
**Murgitroyd & Company**
**Scotland House**
**165-169 Scotland Street**
**Glasgow G5 8PL (GB)**

Remarks:
This application was filed on 25-10-2012 as a divisional application to the application mentioned under INID code 62.

(54) **Method of producing metals and alloys by carbothermal reduction of metal oxides**

(57)    A method of producing a silicon, the method comprising heating raw materials comprising at least one silicon dioxide, and agglomerates comprising a carbonaceous reducing agent and a cured binder to effect reduction of the silicon dioxide to the silicon, wherein each agglomerate has at least one molded open channel, and an apparent density not greater than 99% of the apparent density of an identical agglomerate except without the channel, and wherein the silicon dioxide is an isolated compound and the silicon is metallurgical grade silicon or solar grade silicon.

Figure 1

**Description**

CROSS REFERENCE TO RELATED APPLICATIONS

This application claims the benefit of U.S. Provisional Patent Application Serial No. 60/954328, filed on 07 August 2007, under 35 U.S.C. §119(e). U.S. Provisional Patent Application Serial No. 60/954328 is hereby incorporated by reference.

FIELD OF THE INVENTION

The present invention relates to a method of producing metals and alloys by carbothermal reduction of metal oxides and more particularly to a method comprising heating raw materials comprising at least one metal oxide, and agglomerates comprising a carbonaceous reducing agent and a cured binder to effect reduction of the metal oxide to the metal, wherein each agglomerate has at least one molded open channel, and an apparent density not greater than 99% of the apparent density of an identical agglomerate except without the channel.

BACKGROUND OF THE INVENTION

The large scale production of various metals and alloys by the carbothermal reduction of metal oxides remains an important process in extractive metallurgy. For example, metals and alloys such as silicon, ferrosilicon, aluminum, iron, steel, and tungsten are widely produced by reduction of the corresponding metal oxides with a carbonaceous reducing agent in an electric arc furnace.
In carbothermal reductions, the carbonaceous reducing agent is typically introduced into the furnace in the form of agglomerates, such as pellets, lumps, or briquettes. Moreover, agglomerates having low apparent density and low bulk density are highly desired for optimal operation of the furnace and control of the process. The advantages of using agglomerates having low apparent and bulk densities typically include relatively high yield, high metal production rate, and low energy consumption. Furthermore, agglomerates should have sufficient strength to withstand conventional handling operations and the harsh environment of a metallurgical furnace, without being crushed.
Although numerous processes for the carbothermal reduction of metal oxides are reported in the art, a need persists for a process employing a carbonaceous reducing agent having substantially lower bulk and apparent densities, while still meeting the requirement for adequate strength.

SUMMARY OF THE INVENTION

The present invention is directed to a method of producing a metal, the method comprising heating raw materials comprising at least one metal oxide, and agglomerates comprising a carbonaceous reducing agent and a cured binder to effect reduction of the metal oxide to the metal, wherein each agglomerate has at least one molded open channel, and an apparent density not greater than 99% of the apparent density of an identical agglomerate except without the channel.
The process of the instant invention employs agglomerates comprising a carbonaceous reducing agent and a cured binder, wherein each agglomerate has at least one molded open channel. Importantly, the agglomerates have low apparent density and low bulk density. In particular, the channels increase the porosity of the furnace charge, thus increasing the circulation of the reacting gases and facilitating the removal of CO gas. As a result, the process exhibits relatively high yield, high metal production rate, and low energy consumption. Further, the process can be carried out using conventional equipment and techniques. Still further, the method is scaleable to a high throughput manufacturing process.
The method of the present invention can be used to produce various metals and alloys from the corresponding metal oxides. In particular, the method can be used to produce metallurgical grade and solar grade silicon from silicon dioxide. Moreover, metals and alloys produced according to the present method have widespread utility in chemical, electrical, and mechanical products and processes.

BRIEF DESCRIPTION OF THE DRAWINGS

Figure 1 shows a perspective view of a first embodiment of an agglomerate according to the present method.
Figure 2 shows a perspective view of a second embodiment of an agglomerate according to the present method.
Figure 3 shows a cross-sectional view of a third embodiment of an agglomerate according to the present method.
Figures 4A and 4B are photographs showing perspective and cross-sectional views, respectively, of a honeycomb briquette prepared as described in the Examples Section, below.

Figure 5 shows a cross-sectional view of a multi-hole die used to prepare the honeycomb briquettes in the Examples below.

DETAILED DESCRIPTION OF THE INVENTION

As used herein, the term "metal" refers to a single metal or a mixture comprising two or more different metals, i.e., an alloy. Moreover, the term "metal" includes semi-metals (metalloids) such as silicon and boron. As used herein, the term "median particle size," also known as the "mass median diameter," is defined as the particle diameter at which fifty percent by mass of the particles have a larger diameter and fifty percent of the particles by mass have a smaller diameter. Graphically, the median particle size corresponds to the diameter at which the cumulative arithmetic curve (plot of percentage by weight versus particle diameter) intersects the 50% line.

A method of producing a metal according to the present invention, comprises heating raw materials comprising at least one metal oxide, and agglomerates comprising a carbonaceous reducing agent and a cured binder to effect reduction of the metal oxide to the metal, wherein each agglomerate has at least one molded open channel, and an apparent density not greater than 99% of the apparent density of an identical agglomerate except without the channel.

The metal oxide can be any metal oxide capable of undergoing carbothermal reduction to produce the corresponding metal. The metal oxide may be an isolated (i.e., substantially pure) compound or a metal oxide-containing ore. The metal oxide can have a variety of physical forms including, but not limited to, lumps, granules, flakes, powder, sand, and gravel. Moreover the metal oxide, when compounded with a binder, may have the form of agglomerates, such as briquettes and pellets.

Examples of metal oxides include, but are not limited to, compounds such as silicon dioxide, iron oxide, aluminum oxide, molybdenum oxide, chromium oxide, boric oxide, tungsten oxide, magnesium oxide, cobalt oxide, nickel oxide, copper oxide, calcium oxide, lead oxide, calcium phosphate, manganese dioxide, beryllium oxide, zirconium oxide, tin oxide, zinc oxide, titanium oxide, and vanadium oxide; and ores containing any of the aforementioned metal oxides.

In one embodiment of the present invention, the metal oxide is silica (i.e., silicon dioxide). Examples of silica include, but are not limited to, crystalline silica such as quartz; and noncrystalline (amorphous) silica such as fused quartz, fumed silica, silica gel, and precipitated silica.

The metal oxide can be a single metal oxide or a mixture comprising two or more metal oxides of different metals or the same metal in different oxidation states. Methods of preparing metal oxides are well known in the art; many metal oxides, including metal oxide-containing ores, are commercially available.

The agglomerates comprise a carbonaceous reducing agent and a cured binder, wherein each agglomerate has at least one molded open channel, and an apparent density not greater than 99% of the apparent density of an identical agglomerate except without the channel.

As used herein, the term "molded open channel" refers to a macroscopic cavity present in the agglomerate by design, where the cavity is continuous with the external surface of the agglomerate. The channel may be open at one end (dead-end channels) or open at two ends (through channels). The channel may have any regular or irregular geometric shape, including cylindrical, slit-shaped, and conical.

The width of the channel is typically at least 1 mm, alternatively at least 3 mm, where the width is defined as the minimum distance between two opposite walls of the channel. For example, the width of a cylindrical channel is the diameter of the cylinder, whereas the width of a slit-shaped channel is the width of the slit. The width of the channel is typically from 1 to 50 mm, alternatively from 1 to 30 mm, alternatively from 2 to 20 mm. The length of a channel is typically at least 2 times the width of the channel.

The number, width, and depth of the channels are such that the agglomerate has an apparent density not greater than 99%, alternatively not greater than 80%, alternatively not greater than 75%, of the apparent density of an identical agglomerate except without the channel(s). For example, the agglomerate typically has an apparent density of from 10 to 99%, alternatively from 40 to 90%, alternatively from 60 to 80%, of the apparent density of an identical agglomerate except without the channel(s).

The "apparent density" of an agglomerate is defined as the ratio of the mass of the agglomerate to the total volume of the agglomerate, where the total volume of the agglomerate is the sum of the volumes of the solid material, pore(s), and molded open channel(s). Also, the term "solid material" refers to an agglomerated mixture comprising carbonaceous reducing agent, a cured binder and, optionally, other ingredients, described below. Further, the term "pore" refers to any void present in the agglomerate not by design, where the void may or may not be continuous with the external surface of the agglomerate. Also, pores typically have a width not greater than 1 $\mu$m, where the width is defined as the minimum distance between two opposite walls of the pore.

The apparent density of an agglomerate can be calculated by measuring the mass and total volume of the agglomerate. Mass of an agglomerate can be determined using a balance. Total volume of an agglomerate having a simple three-dimensional shape (e.g., spherical and cylindrical) can be calculated from the external dimensions of the agglomerate. Total volume of an agglomerate having a complex shape can be determined by measuring the volume of mercury displaced by an identical agglomerate, except without the channel(s). In the later case, the identical agglomerate without the channel(s) is submerged in mercury at room temperature (~23 ± 2 °C). The change in volume of the mercury is equal to the total volume of the corresponding agglomerate having at least one molded open channel. The identical agglomerate without the channel(s) has the same external shape and solid composition as the corresponding agglomerate with the channel(s). The agglomerate without the channel(s) can be prepared using the same materials and methods as used for the corresponding agglomerate with the channel(s), described below, except the mixture of carbonaceous reducing agent, curable binder, and any optional ingredients, are compressed to form an agglomerate having the same external shape, but without the channel(s).

The agglomerates have sufficient strength to withstand handling operations and the harsh environment of a metallurgical furnace, without being crushed. For example, the agglomerates typically have a compression strength of from 5 to 150 lbf, alternatively from 5 to 70 lbf, alternatively from 10 to 40 lbf.

The agglomerates can have a variety of shapes and sizes, depending on the method used to produce them, described below. For example, the agglomerates can be briquettes or pellets. Moreover, the agglomerates can have a variety of regular or irregular three-dimensional external shapes including, but not limited to, cylindrical, cuboidal, cubical, conical, octahedral, spherical, hemispherical, and pyramidal. In one embodiment, the agglomerates have parallel channels open at both ends arranged in a honeycomb pattern.

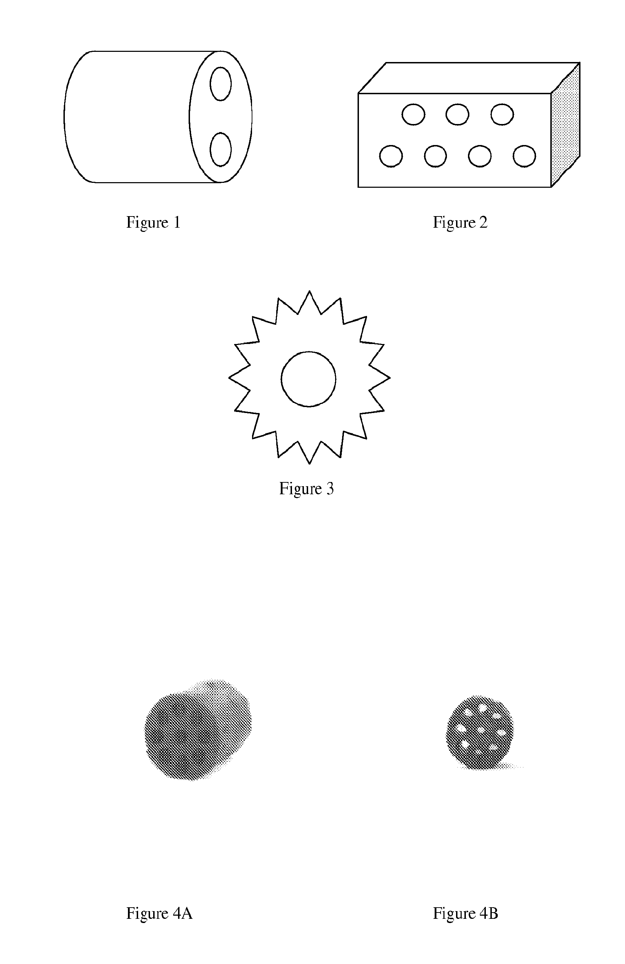

Examples of agglomerates useful in the method of the present invention include, but are not limited to, cylindrical briquettes (Figure 1), cuboidal briquettes (Figure 2), and star-shaped briquettes (Figure 3).

The agglomerates can be identical or a mixture comprising two or more agglomerates that differ in at least one of the following properties: apparent density, shape, number of channels, dimensions of channels, mass, concentration of carbonaceous reducing agent and/or cured binder, and composition of carbonaceous reducing agent and/or cured binder.

The carbonaceous reducing agent can be any solid particulate containing primarily elemental carbon effective in the carbothermal reduction of metal oxides or ores to the corresponding metals and alloys. The carbonaceous reducing agent typically has a median particle size of from 0.01 to 3000 $\mu$m, alternatively from 0.1 to 1000 $\mu$m, alternatively from 10 to 500 $\mu$m.

Examples of carbonaceous reducing agents include, but are not limited to, carbon black, activated carbon, coal, coke, and charcoal. Moreover, the carbonaceous reducing agent can be a single reducing agent or a mixture comprising two or more different agents, each as described above.

The concentration of the carbonaceous reducing agent in each agglomerate is typically from 60 to 98 parts by weight, alternatively from 70 to 90 parts by weight, alternatively from 75 to 85 parts by weight, wherein the total amount of the carbonaceous reducing agent and the cured binder is 100 parts by weight.

The cured binder can be any cured solid binder that provides the agglomerates sufficient compression strength to withstand handling operations and the harsh environment of a metallurgical furnace, without being crushed. As used herein, the term "cured binder" refers to a cross-linked binder having a continuous three-dimensional network structure throughout the agglomerate. The cured binder is typically a thermoset polymer, a cross-linked thermoplastic polymer, or a cross-linked product of thermally polymerizable monomers.

Examples of cured binders include, but are not limited to, cured silicone resins, cured polybutadienes, cured polyesters, cured products of carbohydrates and dicarboxylic acids or anhydrides, cured epoxy resins, cured polyvinyl alcohols, cured amino resins, cured polyurethanes, cured polyimides, cured phenolic resins, cured cyanate ester resins, cured furan resins, cured bismaleimide resins, and cured acrylic resins. In one embodiment of the agglomerates, the cured binder is a cured product of sucrose (sugar) and adipic acid.

The cured binder can be a single cured binder or a mixture comprising two or more different cured binders, each as described above. Moreover, the concentration of the cured binder is typically from 2 to 40 parts by weight, alternatively from 10 to 30 parts by weight, alternatively from 15 to 25 parts by weight, wherein the total amount of the carbonaceous reducing agent and the cured binder is 100 parts by weight.

In addition to the carbonaceous reducing agent and the cured binder, the agglomerates can further comprise at least one additional ingredient, provided the ingredient does not inhibit reduction of the metal oxide to the corresponding metal, as described below. Examples of additional ingredients include, but are not limited to, fibers such as polyethylene fibers and paper fibers; and metal oxides. In particular, the agglomerates can comprise at least a portion (i.e., part or all) of the metal oxide, described above, in the raw materials. When present in the agglomerates, the metal oxide typically has the form of particles having a median particle size of from 0.01 to 3000 $\mu$m, alternatively from 0.1 to 1000 $\mu$m, alternatively from 10 to 500 $\mu$m.

An agglomerate according to the present invention can be prepared by (i) forming a mixture comprising a carbonaceous reducing agent and a curable binder into a green agglomerate having at least one molded open channel; and (ii) curing the curable binder of the green agglomerate to produce an agglomerate having an apparent density not greater than 99% of the apparent density of an identical agglomerate except without the channel.

In step (i) of the method of preparing an agglomerate, a mixture comprising a carbonaceous reducing agent and a curable binder is formed into a green agglomerate having at least one molded open channel.

The carbonaceous reducing agent is as described and exemplified above for the agglomerate of the present invention. The concentration of the carbonaceous reducing agent in the mixture is typically from 60 to 98 parts by weight, alternatively from 70 to 90 parts by weight, alternatively from 75 to 85 parts by weight, wherein the total amount of the carbonaceous reducing agent and the curable binder is 100 parts by weight.

The curable binder can be any binder that can be cured (i.e., cross-linked) upon application of heat. The curable binder is typically a thermosetting polymer, a mixture of a thermoplastic polymer and a cross-linking agent, or a mixture of thermally polymerizable monomers. When the curable binder is a solid at ambient temperature and pressure, the curable binder typically has the form of particles having a median particle size of from 0.01 to 3000 $\mu$m, alternatively from 0.1 to 1000 $\mu$m, alternatively from 10 to 500 $\mu$m.

Examples of curable binders include, but are not limited to, curable silicone resins, polybutadienes, unsaturated polyesters, mixtures of carbohydrates and dicarboxylic acids or anhydrides, epoxy resins, amino resins, polyurethanes, polyimides, phenolic resins, cyanate ester resins, furan resins, bismaleimide resins, and acrylic resins. In one embodiment of the agglomerate, the curable binder is a mixture of sucrose and adipic acid. The mole ratio of adipic acid to sucrose is typically from 0.2 to 1.2, alternatively from 0.4 to 1.0, alternatively from 0.5 to 0.7.

The curable binder can be a single curable binder or a mixture comprising two or more different curable binders, each as described above. Moreover, methods of preparing curable binders are well known in the art; many curable binder compositions are commercially available.

The concentration of the curable binder in the mixture is typically from 2 to 40 parts by weight, alternatively from 10 to 30 parts by weight, alternatively from 15 to 25 parts by weight, wherein the total amount of the carbonaceous reducing agent and the curable binder is 100 parts by weight.

The mixture comprising the carbonaceous reducing agent and curable binder can further comprise additional ingredients, provided the ingredient does not prevent the mixture from forming a green agglomerate having at least one molded open channel, inhibit cure of the binder, or inhibit reduction of the metal oxide to the corresponding metal in the process of the present invention. Examples of additional ingredients include, but are not limited to, fibers such as polyethylene fibers and paper fibers; metal oxides; and solvents. In particular, the mixture can further comprise at least a portion (i.e., part or all) of the metal oxide, described above, in the raw materials.

The mixture can further comprise at least one solvent. The solvent may be used to aid dispersal of the ingredients (i.e., carbonaceous reducing agent, curable binder, etc.) in the mixture, adjust the consistency of the mixture prior to forming the green agglomerate, or improve cohesion of the ingredients in the green agglomerate formed from the mixture. The solvent can be any nonpolar or polar (protic, aprotic, or dipolar aprotic) solvent that does not react with the carbonaceous reducing agent, curable binder, or other ingredients in the mixture in step (i) or step (ii) of the method of preparing the agglomerate. The solvent typically has a normal boiling point below the cure temperature of the curable binder. The solvent may be miscible or immiscible with the curable binder. For example, the solvent may form a suspension or an emulsion with the curable binder.

Examples of solvents include, but are not limited to, saturated aliphatic hydrocarbons such as n-pentane, hexane, n-heptane, isooctane and dodecane; cycloaliphatic hydrocarbons such as cyclopentane and cyclohexane; aromatic hydrocarbons such as benzene, toluene, xylene and mesitylene; cyclic ethers such as tetrahydrofuran (THF) and dioxane; ketones such as methyl isobutyl ketone (MIBK); halogenated alkanes such as trichloroethane; halogenated aromatic hydrocarbons such as bromobenzene and chlorobenzene; alcohols such as methanol, ethanol, 1-propanol, 2-propanol, 1-butanol, 2-butanol, 2-methyl-1-butanol, 1,1-dimethyl-1-ethanol, pentanol, hexanol, cyclohexanol, hepatanol, and octanol; and water. Moreover, the solvent can be a single solvent or a mixture comprising two or more different solvents, each as described and exemplified above.

The concentration of the solvent is typically from 0 to 70% (w/w), alternatively from 20 to 60% (w/w), alternatively from 40 to 50% (w/w), based on the total weight of the mixture.

The mixture can be prepared by combining the carbonaceous reducing agent, curable binder, and any optional ingredients, in any order and thoroughly mixing the ingredients. Mixing can be accomplished using techniques known in the art such as milling, blending, and stirring, either in a batch or continuous process. Mixing is typically continued until the ingredients are uniformly distributed throughout the mixture. The mixture can also be prepared by combining the ingredients in a screw feeder, which provides the advantage of precompacting and deaerating the incoming materials. A screw feeder can also crush infeed particles to achieve a more favorable size consistency for extrusion or molding. In some cases, heat generated by the screw feeding process may be beneficial, for example, by softening the binder prior to agglomeration. Furthermore, a twin screw extruder can be used to sequentially mix the ingredients and extrude the mixture into a green agglomerate of desired shape.

The mixture can be formed into a green agglomerate having at least one molded open channel using conventional methods, such as compression molding, injection molding, and extrusion. As used herein, the term "green agglomerate" refers to an agglomerate comprising a curable, but uncured, binder. For example, the mixture can be formed into a green agglomerate of a desired shape by extruding the mixture through a die containing apertures corresponding to molded open channels in the resulting green agglomerate.

In step (ii) of the method of preparing the agglomerate of the present invention, the curable binder of the green agglomerate is cured. The curable binder can be cured by heating the green agglomerate at a temperature and for a time sufficient to cure the binder. The green agglomerate is typically heated at a temperature below the decomposition temperatures of both the curable binder and the cured binder produced there from. The cure conditions for a particular curable binder are known in the art. The green agglomerate can be heated in air or an inert atmosphere (e.g., nitrogen or argon), depending on the stability of the curable binder in air.

The green agglomerate can be heated in a conventional oven, conveyor oven, or furnace. The green agglomerate can also be heated in a furnace with a metal oxide in the carbothermal reduction process of the present invention to effect cure of the curable binder prior to production of the metal.

The method of preparing the agglomerate can further comprise, before curing the binder of the green agglomerate, heating the green agglomerate at a temperature and for a time sufficient to at least partially remove solvent and/or partially cure the curable resin. The resulting green agglomerate remains flexible, but has the advantages of being less tacky and more durable than the green agglomerate before heat treatment.

According to the present method of producing a metal, the ratio of the number of moles of total carbon to the number of moles of the metal oxide in the raw materials is typically a stoichiometric amount, plus or minus 20%, based on the balanced chemical equation for the carbothermal reduction of the particular metal oxide. As used herein, "moles of total carbon" refers to the sum of the number of moles of carbon from the carbonaceous reducing agent, binder, and any optional carbon-containing ingredients, e.g., wood chips, in the raw materials. For example, the mole ratio of the total carbon to silicon dioxide used in the carbothermal reduction of silicon dioxide is typically $2 \pm 0.4$, based on the following chemical equation: $SiO_2 + 2C \rightarrow Si + 2CO$.

The raw materials may comprise at least one additional ingredient, provided the ingredient does not inhibit reduction of the metal oxide to the corresponding metal, as described below. Examples of additional ingredients include, but are not limited to, wood chips and limestone.

The raw materials can be heated in any furnace commonly used in smelting operations, particularly the carbothermal reduction of metal oxides or ores containing metal oxides. Suitable furnaces are typically equipped with a tap for recovering the metal in a molten state at regular intervals during the process. Examples of furnaces include, but are not limited to, blast furnaces; and electric arc furnaces such as plasma-arc furnaces, DC-arc furnaces, submerged-arc furnaces, and arc-resistance furnaces. Furnace designs suitable for the carbothermal production of various metals from their corresponding oxides are well known in the art. For example, submerged-arc furnaces are typically used for the production of silicon and ferrosilicon.

The raw materials are heated at a sufficient temperature and for a sufficient time to effect reduction of the metal oxide to the metal. The temperature and time of heating will depend on the particular metal oxide, the furnace design, and quantities of raw materials. Although certain metal oxides can be reduced at temperatures lower than the temperature required to melt the metal, typically the raw materials are heated at temperatures high enough to melt the resulting metal, so the metal can be promptly removed from the furnace. Conditions for carrying out the carbothermal reduction of particular metal oxides are known in the art.

The method of the present invention can further comprise recovering the metal from the furnace. For example, the metal can be recovered from the furnace by tapping the molten metal at regular intervals during the production cycle. Moreover, the method can further comprise refining (i.e., purifying) the metal product. Methods of refining metals are well known in the art, and are exemplified by physical methods such as liquation, zone melting, distillation, degassing, vacuum melting, and filtration; and chemical methods such as oxidation, deoxidation, precipitation of intermetallic compounds, and electro slag refining.

Examples of metals produced by the present method include, but are not limited to, silicon, iron, aluminum, molybdenum, chromium, boron, tungsten, magnesium, cobalt, nickel, copper, calcium, lead, phosphorus, manganese, beryllium, zirconium, tin, zinc, titanium, and vanadium. Examples of alloys include, but are not limited to, nonferrous alloys such as copper-beryllium alloys, nickel-beryllium alloys, aluminum-beryllium alloys; and ferroalloys such as ferrosilicon, ferromolybdenum, ferromanganese, ferrochromium, ferrophosphorus, ferrotitanium, ferroboron, ferrotungsten, and ferrovanadium.

The process of the instant invention employs agglomerates comprising a carbonaceous reducing agent and a binder, wherein each agglomerate has at least one molded open channel. Importantly, the agglomerates have low apparent density and low bulk density. In particular, the channels increase the porosity of the furnace charge, thus increasing the circulation of the reacting gases and facilitating the removal of CO gas. As a result, the process exhibits relatively high yield, high metal production rate, and low energy consumption. Also, the agglomerates have sufficient strength to withstand handling operations and the harsh environment of a metallurgical furnace, without being crushed. Further, the process can be carried out using conventional equipment and techniques. Still further, the method is scaleable to a high throughput manufacturing process.

The method of the present invention can be used to produce various metals and alloys from the corresponding metal oxides. In particular, the method can be used to produce metallurgical grade and solar grade silicon from silicon dioxide. Moreover, metals and alloys produced according to the present method have widespread utility in chemical, electrical, and mechanical products and processes.

EXAMPLES

The following examples are presented to better illustrate the method of the present invention, but are not to be considered as limiting the invention, which is delineated in the appended claims. Unless otherwise noted, all parts and percentages reported in the examples are by weight. The following methods and materials were employed in the examples:

The yield of silicon metal was calculated using the following equation:

$$\text{Yield Si } (\%) = \text{actual yield of Si (kg)/theoretical yield Si (kg) x 100.}$$

The theoretical yield of silicon was calculated from the total weight of silicon dioxide in the raw materials using the following chemical equation: $SiO_2 + 2C \rightarrow Si + 2CO$.

Wood Chips: Douglas fir woodchips obtained from Weyerhaeuser (Albany, OR) and sieved to obtain a mesh size greater than 0.5 in.

Quartz: Lumps of quartz having a silica content of 99.2% and a mesh size of from 0.5 in. to 2.5 in.

Carbon Black: Pellets of carbon black, sold under the trademark Corax® N 660 (Degussa Corporation), having a sieve residue (325 Mesh) of 300 ppm max, a CTAB surface area of 38 $m^2$/g, a DBP (dibutyl phthalate) absorption of 90 mL/100g, an ash content of 0.5% max, and an individual pellet hardness (1.4-1.7 mm) of 30 g.

Sugar: Granulated sugar, sold under the trademark Great Value® (Walmart Corporation).

Adipic Acid (99%) was obtained from Alfa Aesar (Ward Hill, MA).

Example 1

This example demonstrates preparation of carbon black honeycomb briquettes. Carbon black (45.4 kg), 13.0 kg of refined sugar, and 6.5 kg of adipic acid were combined in a 55-gallon plastic-lined steel drum. The contents of the drum were mixed for 7 h using a drum roller. Deionized water (47 kg) was added to the mixture, and mixing was continued for an additional 15 h to give a viscous paste.

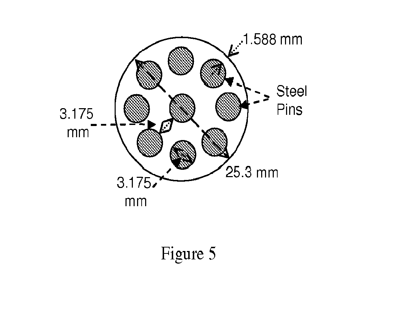

The mixture was then extruded into cylindrical green honeycomb briquettes at a rate of 24 kg/h using a Bonnot 3" Twin-Packer Extruder (480 V, 7 hp), equipped with a multi-hole die (see Figure 5). The briquettes were placed on a conveyor belt (steel mesh) in a single layer and passed at a rate of 1.1 m/min. through a hot air oven at 260 °C for a dwell time of 4 min. The temperature of the briquettes upon exiting the oven was generally not greater than 80 °C. The partially dried briquettes were cooled to room temperature with the aid of a fan positioned by the exit port of the oven.

The briquettes were placed in an oven (Blue M, 120 V, 30 A) on aluminum trays and heated to 170 °C at a rate of 2 °C/min. in a nitrogen atmosphere. After 5 h at 170 °C, the oven was turned off and the briquettes were allowed to cool to room temperature. A representative briquette is shown in Figures 4A and 4B.

Example 2

A120-KVA electric arc furnace equipped with a 24-in. diameter graphite hearth and a 6-in. diameter graphite electrode was charged with quartz lumps (6.00 kg), 2.78 kg of wood chips, and 2.48 kg of the honeycomb briquettes of Example 1. About 8 h after striking the arc, the furnace tap hole was opened to remove the silicon. Thereafter, the furnace was tapped about every two hours during a total period of 60 h. After each tap, the furnace was manually stoked and charged with raw materials, i.e., briquettes, quartz, and wood chips in the weight ratio of the initial charge, to maintain a constant charge depth. During the 60-h run, 468 kg of quartz, 171.1 kg of honeycomb briquettes, and 130.3 kg of wood chips were fed into the furnace to produce a total of 124 kg of silicon with an energy consumption of 4249 kwh. During the final 24 h of the run, 192 kg of quartz, 77.4 kg of honeycomb briquettes, and 101.8 kg of woodchips were fed into the furnace to produce 72.2 kg (80.5%) of silicon with a specific energy consumption of 26.6 kwh/kg Si. The silicon had average boron and phosphorous contents of 4.2 ppmw and 47.9 ppmw, respectively, as determined by glow discharge mass spectrometry.

Example 3

A 120-KVA electric arc furnace equipped with a 24-in. diameter graphite hearth and a 6-in. diameter graphite electrode was charged with 6.00 kg of quartz lumps and 3.02 kg of the honeycomb briquettes of Example 1. About 9 h after striking the arc, the furnace tap hole was opened to remove the silicon. Thereafter, the furnace was tapped about every two hours during a total period of 55 h. After each tap, the furnace was manually stoked and charged with raw materials, i.e., briquettes and quartz in the weight ratio of the initial charge, to maintain a constant charge depth. During the 55-h run, 474 kg of quartz and 232.2 kg of honeycomb briquettes were fed into the furnace to produce a total of 131 kg of silicon with an energy consumption of 4073.1 kwh. During the final 24 h of the run, 282 kg of quartz and 142 kg of honeycomb briquettes were fed into the furnace to produce 102.1 kg (77.6%) of silicon with a specific energy consumption of 25.3 kwh/kg Si. The silicon had average boron and phosphorous contents of 2.8 ppmw and 16.7 ppmw, respectively, as determined by glow discharge mass spectrometry.

The present application is a divisional application based on an earlier European Application No 08827006.1, which was in turn derived from PCT Application No PCT/US08/072050. The following numbered clauses, which correspond to the claims of that earlier PCT Application as filed, form part of the present disclosure and in particular form further aspects of the invention, whether or not they appear in the present claims.

(a) A method of producing a metal, the method comprising heating raw materials comprising at least one metal oxide, and agglomerates comprising a carbonaceous reducing agent and a cured binder to effect reduction of the metal oxide to the metal, wherein each agglomerate has at least one molded open channel, and an apparent density not greater than 99% of the apparent density of an identical agglomerate except without the channel.

(b) The method according to clause (a), wherein each agglomerate has an apparent density not greater than 80% of the apparent density of an identical agglomerate except without the channel.

(c) The method according to clause (b) wherein each agglomerate has an apparent density not greater than 75% of the apparent density of an identical agglomerate except without the channel.

(d) The method according to clause (a), wherein the agglomerates are briquettes or pellets.

(e) The method according to clause (d), wherein the briquettes are honeycomb briquettes.

(f) The method according to clause (a), wherein the agglomerates have a cylindrical shape.

(g) The method according to clause (a), wherein the carbonaceous reducing agent is selected from carbon black and activated carbon.

(h) The method according to clause (a), wherein the cured binder is a cured product of sucrose and adipic acid.

(i) The method according to clause (a), wherein the agglomerates comprise at least a portion of the metal oxide in the raw materials.

(j) The method according to clause (a), wherein the raw materials further comprise wood chips.

(k) The method according to clause (a), wherein the raw materials are heated in an electric arc furnace.

(l) The method according to clause (k), further comprising recovering the metal from the furnace.

(m) The method according to any of the preceding clauses, wherein the metal oxide is silicon dioxide.

## Claims

1. A method of producing a silicon, the method comprising heating raw materials comprising at least one silicon dioxide, and agglomerates comprising a carbonaceous reducing agent and a cured binder to effect reduction of the silicon dioxide to the silicon, wherein each agglomerate has at least one molded open channel, and an apparent density not greater than 99% of the apparent density of an identical agglomerate except without the channel, and wherein the silicon dioxide is an isolated compound and the silicon is metallurgical grade silicon or solar grade silicon.

2. The method according to claim 1, wherein each agglomerate has an apparent density not greater than 80% of the apparent density of an identical agglomerate except without the channel

3. The method according to claim 2 wherein each agglomerate has an apparent density not greater than 75% of the apparent density of an identical agglomerate except without the channel.

4. The method according to claim 1, wherein the agglomerates are briquettes or pellets.

5. The method according to claim 4, wherein the briquettes are honeycomb briquettes.

6. The method according to claim 1, wherein the agglomerates have a cylindrical shape.

7. The method according to claim 1, wherein the carbonaceous reducing agent is selected from carbon black and activated carbon.

8. The method according to claim 1, wherein the cured binder is a cured product of sucrose and adipic acid.

9. The method according to claim 1, wherein the agglomerates comprise at least a portion of the silicon dioxide in the raw materials.

10. The method according to claim 1, wherein the raw materials further comprise wood chips.

11. The method according to claim 1, wherein the raw materials are heated in an electric arc furnace.

12. The method according to claim 11, further comprising recovering the silicon from the furnace.

Figure 1

Figure 2

Figure 3

Figure 4A

Figure 4B

Figure 5

**Europäisches Patentamt**
**European Patent Office**
**Office européen des brevets**

## EUROPEAN SEARCH REPORT

Application Number

EP 12 19 0009

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 247 528 A (DOSAJ VISHU D ET AL) 27 January 1981 (1981-01-27) * column 3, line 3 - column 4, line 59; examples 1-9 * | 1-12 | INV. C22B5/10 C01B33/025 C22B1/245 |
| X | RUSTIONI M ET AL: "Advances in Solar SIlicon Production", ELECTROCHEMICAL SOCIETY PROCEEDINGS, ELECTROCHEMICAL SOCIETY, PENNINGTON, NJ, US, vol. 85-9, 1 January 1985 (1985-01-01), pages 288-303, XP009105800, ISSN: 0161-6374 * page 291 - page 293 * | 1-12 | |
| X | US 3 704 094 A (MCCLINCY RICHARD JOSEPH ET AL) 28 November 1972 (1972-11-28) * column 3, line 18 - line 72; example 1 * | 1-4,9, 11,12 | |
| A | HUNT LEE P ET AL: "PROGRESS ON THE DOW CORNING PROCESS FOR SOLAR-GRADE SILICON", JOURNAL OF APPLIED METALWORKING,, 1 January 1979 (1979-01-01), pages 98-105, XP009105796, ISSN: 0162-9700 * page 100 - page 101 * | 1-12 | TECHNICAL FIELDS SEARCHED (IPC) C22B C01B |

The present search report has been drawn up for all claims

| Place of search | Date of completion of the search | Examiner |
|---|---|---|
| Munich | 8 January 2013 | Juhart, Matjaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 19 0009

This annex lists the patent family members relating to the patent documents cited in  the above-mentioned European search report.
The members are as contained in the European Patent Office EDP file on
The European Patent Office is in no way liable for these particulars which are merely given for the purpose of information.

08-01-2013

| Patent document cited in search report | | Publication date | Patent family member(s) | | Publication date |
|---|---|---|---|---|---|
| US 4247528 | A | 27-01-1981 | AU | 523622 B2 | 05-08-1982 |
| | | | AU | 5095879 A | 16-10-1980 |
| | | | BE | 879715 A1 | 08-01-2013 |
| | | | CA | 1136382 A1 | 30-11-1982 |
| | | | DE | 3013319 A1 | 16-10-1980 |
| | | | FR | 2453827 A1 | 07-11-1980 |
| | | | GB | 2046232 A | 12-11-1980 |
| | | | JP | 55136116 A | 23-10-1980 |
| | | | NL | 7907282 A | 14-10-1980 |
| | | | NO | 793270 A | 14-10-1980 |
| | | | SE | 438667 B | 29-04-1985 |
| | | | SE | 7907715 A | 12-10-1980 |
| | | | US | 4247528 A | 27-01-1981 |
| US 3704094 | A | 28-11-1972 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 95432807 P
- US 954328 P
- EP 08827006 A
- US 08072050 W